(19) Europäisches Patentamt
European Patent Office
Office européen des brevets

(11) **EP 4 696 148 A1**

(12) **EUROPEAN PATENT APPLICATION**
published in accordance with Art. 153(4) EPC

(43) Date of publication:
**18.02.2026 Bulletin 2026/08**

(21) Application number: **24803742.6**

(22) Date of filing: **09.05.2024**

(51) International Patent Classification (IPC):
**A23L 5/40** *(2016.01)*    **A23L 27/20** *(2016.01)*
**A23L 3/46** *(2006.01)*    **A23L 5/00** *(2016.01)*

(52) Cooperative Patent Classification (CPC):
**A23B 2/93; A23L 5/00; A23L 5/40; A23L 27/20**

(86) International application number:
**PCT/KR2024/006265**

(87) International publication number:
**WO 2024/232689 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2023 KR 20230060452**

(71) Applicant: **CJ Cheiljedang Corporation
Seoul 04560 (KR)**

(72) Inventors:
• **PARK, Chun Il
Seoul 04560 (KR)**

• **JUNG, Jun Young
Seoul 04560 (KR)**
• **YU, Jae Hun
Seoul 04560 (KR)**
• **KIM, Jun-Woo
Seoul 04560 (KR)**
• **CHOI, Jung Hwa
Seoul 04560 (KR)**

(74) Representative: **Meissner Bolte Partnerschaft
mbB
Patentanwälte Rechtsanwälte
Postfach 86 06 24
81633 München (DE)**

(54) **METHOD FOR PREPARING FERMENTATION PRODUCT**

(57)    The present disclosure relates to a method for preparing a fermentation product, comprising: a decolorization step of preparing a decolorizing process liquid by decolorizing the process liquid comprising a fermentation product with an adsorbent; and a drying step of drying the decolorizing process liquid to obtain a fermentation product, wherein the decolorization step comprises: measuring the color value and purity of the process liquid; determining the color value of the decolorizing process liquid to be obtained; and determining the weight of the adsorbent to be used for decolorization based on the color value and purity of the process liquid and the color value of the decolorizing process liquid to be obtained.

[FIG. 1]

## Description

**[Technical Field]**

The present disclosure relates to a method for preparing fermentation products including a decolorization process.

**[Background Art]**

Fermentation products refer to useful substances produced using microorganisms or fungi, *etc*. The final product thereof will appear dark brown due to the natural brown substances of Maillard products consisting of amino acids and sugars derived from microorganisms, when they are prepared into dried products in powder form without any treatment. However, due to the nature of most food seasoning materials, consumers prefer products with a bright color. To this end, in the case of soy sauce and various seasoning materials, an activated carbon decolorization process is applied to control the dark color of the products.

Due to the nature of microbial fermentation liquids, the final products may not have a consistent color upon fermentation, even when the fermentation conditions are uniform. As a result, if decolorization is carried out using a consistent method which is not related to the initial conditions, such as the existing decolorization method, color variation will appear between the final products, and if an excessive decolorization process is applied to prevent such color variation, the cost will excessively increase. Accordingly, in the present disclosure, it is intended to maintain the color quality of the final powder products by controlling the intensity of decolorization, considering the color variation of the fermentation process liquid.

**[Disclosure]**

**[Technical Problem]**

In the present disclosure, it is intended to establish a decolorization process condition capable of consistently maintaining the color quality of fermentation products.

**[Technical Solution]**

It is one object of the present disclosure to establish a decolorization process condition capable of consistently maintaining the color quality of fermentation products.

Additionally, it is another object of the present disclosure to provide a fermentation product which maintains a consistent level of color through a decolorization process.

**[Advantageous Effects]**

According to the present disclosure, the color quality of the final products can be maintained at a consistent level by controlling the intensity of decolorization, thereby facilitating quality control. Additionally, the amount of adsorbent used unnecessarily in the decolorization process and the product defect rate can be reduced by accurately controlling the amount of adsorbent needed for the decolorization process.

**[Brief Description of Drawings]**

FIG. 1 is a flowchart showing the method for preparing a fermentation product according to the present disclosure.

FIG. 2 is a graph showing the relationship between the color value (L*) of the fermentation product and the color value of the decolorizing process liquid according to the present disclosure.

FIG. 3 is a perspective view showing part of the production apparatus for the fermentation product according to the present disclosure.

FIG. 4 is a correlation graph between the color value of the decolorizing process liquid ($CV_f$) predicted through a model equation and the measured color value of the decolorizing process liquid ($CV_f$).

**[Detailed Description of Preferred Embodiments]**

The present disclosure will be described in detail as follows. Meanwhile, each description and embodiment disclosed herein can be applied to other descriptions and embodiments, respectively. That is, all combinations of various elements disclosed herein fall within the scope of the present disclosure. Further, the scope of the present disclosure is not limited by the specific description described below.

According to the present disclosure, fermentation products with appropriate color value can be prepared using the relationship between the physical properties of the process liquid, which is the intermediate product of the production process of the fermentation products, and the decolorizing process liquid, and the weight of the adsorbent used in the decolorization process.

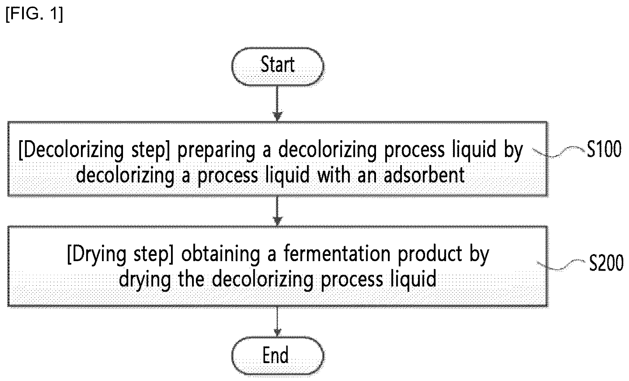

FIG. 1 is a flowchart showing the method for preparing fermentation products according to the present disclosure.

With reference to FIG. 1, the method for preparing fermentation products according to the present disclosure includes a decolorization step **(S100)** of preparing a decolorizing process liquid by decolorizing the process liquid including a fermentation product with an adsorbent; and a drying step **(S200)** of drying the decolorizing process liquid to obtain a fermentation product, wherein the decolorization step includes: measuring the color value and purity of the process liquid; determining the color value of the decolorizing process liquid to be obtained; and determining the weight of the adsorbent to be used for decolorization based on the color value and purity of the process liquid and the color value of the decolorizing process liquid to be obtained. Hereinafter, each step will be described in detail.

First, in the decolorization step **(S100),** a decolorizing process liquid is prepared by decolorizing the process liquid including the fermentation product with an adsorbent.

The decolorization process is a process by which impurities or unwanted pigments are removed from the process liquid including the fermentation product. This process is usually performed after fermentation and can improve the quality, shelf life, stability and efficacy of amino acids. The decolorization process may be performed by adding a decolorizing agent (*e.g.*, hydrogen peroxide) that can lead to a chemical reaction for decolorization. However, in this case, the decolorizing agent may adversely affect the quality of the fermentation product and may remain in the fermentation product, and thus is not suitable for production of fermentation products in food. Therefore, in the present disclosure, an adsorbent that physically removes impurities or unwanted pigments in the process liquid may be used.

Activated carbon may be used as an adsorbent so as to perform the decolorization process. Activated carbon is a porous carbon substrate that can efficiently adsorb impurities because it has a large specific surface area. The decolorization process using activated carbon may be carried out by a method in which an amino acid solution is filtered through a column filled with activated carbon, or a method of adding activated carbon directly into a reactor or tank filled with the process liquid and stirring using an overhead stirrer under constant temperature conditions, and then filtering and removing activated carbon. Additionally, the decolorization process using activated carbon may be performed in various ways, and the method for performing the decolorization process may be determined in consideration of the type of reactor, type and amount of fermentation products, *etc.* In the decolorization process, impurities and pigments in the process liquid are adsorbed on the surface of activated carbon, and amino acids can be captured by passing through a column. The activated carbon can then be removed and replaced with fresh activated carbon for the next batch of amino acids.

In addition to activated carbon, adsorbents for the decolorization process may include clay minerals, silica gel, polymer resin, and Celite, *etc.* Examples of clay minerals include kaolin, bentonite, montmorillonite, *etc.* They have a large surface area and can adsorb a wide range of impurities, including pigments and dissolved organic substances. Silica gel is a synthetic adsorbent with high porosity and large surface area. Silica gel can also be used to remove impurities and pigments from process liquids. Examples of polymer resins include cross-linked polystyrene, polyvinyl chloride, *etc.,* which are highly porous and can be functionalized to selectively adsorb particular impurities. Celite, which is diatomaceous earth, is a natural sedimentary rock composed mostly of a skeleton of diatomaceous earth. Celite may be used as a filter aid and adsorbent in a variety of industrial fields, including amino acid purification.

The process liquid introduced into the decolorization process is a solution including the fermentation products and may be prepared by a fermentation process. The fermentation product included in the process liquid may be an amino acid or a nucleic acid. When the fermentation product included in the process liquid is an amino acid, the amino acid may be at least one selected from the group consisting of glycine, alanine, serine, proline, valine, threonine, cysteine, isoleucine, leucine, asparagine, aspartic acid, glutamine, lysine, glutamic acid, methionine, histidine, phenylalanine, selenocysteine, arginine, tyrosine, and tryptophan. When the fermentation product is a nucleic acid, the nucleic acid may refer to a compound consisting of a base, sugar, and phosphate. Specifically, in the present disclosure, the nucleic acid may be any one or more selected from the group consisting of 5'-guanosine monophosphate (5'-GMP) and 5'-inosine monophosphate (5'-IMP). The fermentation products described above are exemplary, and the present disclosure can also be applied to the production of fermentation products other than the examples described above. The present disclosure revealed the correlation between the concentration of color substance in the process liquid, the adsorption rate of color substance in activated carbon, and the color of the finally prepared fermentation product, and is not limited to the production of particular fermentation products, but may be applied to the production of various types of fermentation products.

In the decolorization step **(S100),** prior to performing the decolorization process, the color value of the product to be prepared or the decolorizing process liquid is determined, and the weight of an adsorbent needed for decolorization is determined accordingly. Specifically, in the decolorization step **(S100),** the following steps may be performed: a step of measuring the color value and purity of the process liquid; a step of determining the color value of the decolorizing process liquid to be obtained; and a step of determining the weight of the adsorbent to be used for decolorization based on the color value and purity of the process liquid and the color value of the decolorizing process liquid to be obtained.

In the step of measuring the color value and purity of the process liquid, the color value of the process liquid may be calculated by dividing the absorbance of visible light/ultraviolet light by the concentration (g/L) of the fermentation product in the process liquid. In particular, the visible light/ultraviolet light used to measure the color value may have a wavelength of about 420 nm. In particular, when the visible light/ultraviolet light of the above-mentioned wavelength passes through the process liquid, the ratio between the intensity of transmitted light (I) and the intensity of incident light ($I_0$) is referred to as transmittance (T), and the common logarithm of the reciprocal of transmittance is referred to as absorbance (A). A photoelectric spectrophotometer or a photoelectric colorimeter may be used as a measuring device to measure the absorbance of the process liquid, but in addition, various measuring methods and devices may be used as needed.

The purity of the process liquid may mean the concentration of the fermentation product included in the process liquid. For example, when the fermentation product is an amino acid, the purity of the process liquid may be calculated by dividing the weight (g) of the fermentation product included in the process liquid by the amount (g) of solids in the process liquid.

The step of determining the color value of the decolorizing process liquid is a step of determining the color value of the decolorizing process liquid such that the fermentation product to be prepared meets the standard lightness or color value and reduces the defect rate during the production process. The color value of the decolorizing process liquid may be measured/calculated in the same manner as the color value of the process liquid. Specifically, it may be a value obtained by dividing the absorbance of visible light/ultraviolet light of the decolorizing process liquid by the concentration (g/L) of the fermentation product in the decolorizing process liquid. In particular, the wavelength of visible light/ultraviolet light used to measure the color value of the decolorizing process liquid may correspond to the wavelength of visible light/ultraviolet light used to measure the color value of the process liquid.

The lightness or color value of the finally prepared fermentation product is closely related to the color value of the decolorizing process liquid prepared after the decolorization process.

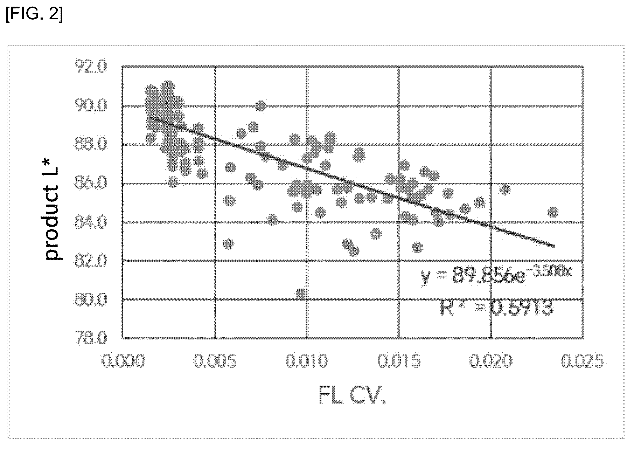

FIG. 2 is a graph showing the relationship between the color value (L*) of the fermentation product and the color value of the decolorizing process liquid.

With reference to FIG. 2, it was confirmed that the color value (CV) of the decolorizing process liquid and the color value (L*) of the product form an exponential relationship, and that this relationship shows a normal probability distribution. Accordingly, the optimal color value (CV) of the decolorizing process liquid that can reduce the product defect rate was obtained, and it was confirmed that when the standard lightness of the product (L*) was between 82 to 87, the lowest color defect rate was observed at the color value of 0.004 of the decolorizing process liquid.

The L* value, which is the lightness/color value of the fermentation product, is a color coordinate value according to the CIE color system. The CIE color system is a standardized color matching system that uses tristimulus (X, Y, Z) to express all colors in the visible spectrum, which may be converted to the Lab* color space to obtain accurate color differences. The CIE color system provides a method to objectively measure and quantify color, thus enabling consistent and accurate color reproduction in various fields such as display technology, printing, and photography, *etc.* In the CIE color system, the L* value represents lightness from zero (black) to 100 (white).

[Table 1]

| Color Value (CV) of Decolorizing Process liquid | Average L* of Fermentation product | Bottom 5% of L* of Fermentation product | Top 5% of L* of Fermentation product | Predicted Defect Rate (%) |
|---|---|---|---|---|
| 0.033 | 80.00 | 79.53 | 83.22 | 100% |
| 0.031 | 80.50 | 80.03 | 83.72 | 100% |
| 0.030 | 81.00 | 80.53 | 84.22 | 100% |
| 0.028 | 81.50 | 81.03 | 84.72 | 100% |
| 0.026 | 82.00 | 81.53 | 85.22 | 100% |
| 0.024 | 82.50 | 82.03 | 85.72 | 100% |
| 0.023 | 83.00 | 82.53 | 86.22 | 99% |

(continued)

| Color Value (CV) of Decolorizing Process liquid | Average L* of Fermentation product | Bottom 5% of L* of Fermentation product | Top 5% of L* of Fermentation product | Predicted Defect Rate (%) |
|---|---|---|---|---|
| 0.021 | 83.50 | 83.03 | 86.72 | 97% |
| 0.019 | 84.00 | 83.53 | 87.22 | 93% |
| 0.018 | 84.50 | 84.03 | 87.72 | 84% |
| 0.016 | 85.00 | 84.53 | 88.22 | 71% |
| 0.014 | 85.50 | 85.03 | 88.72 | 54% |
| 0.013 | 86.00 | 85.53 | 89.22 | 37% |
| 0.011 | 86.50 | 86.03 | 89.72 | 22% |
| 0.009 | 87.00 | 86.53 | 90.22 | 11% |
| 0.008 | 87.50 | 87.03 | 90.72 | 5% |
| 0.006 | 88.00 | 87.53 | 91.22 | 2% |
| 0.004 | 88.50 | 88.03 | 91.72 | 1% |
| 0.003 | 89.00 | 88.53 | 92.22 | 3% |
| 0.001 | 89.50 | 89.03 | 92.72 | 7% |
| 0.000 | 90.00 | 89.53 | 93.22 | 16% |

Meanwhile, the weight of the adsorbent to be used for decolorization may be determined based on the color value and purity of the process liquid and the color value of the decolorizing process liquid to be prepared. The amount of adsorbent is a factor that affects the color value of the decolorizing process liquid and further affects the lightness/color value of the fermentation product. The weight of the adsorbent to be used for decolorization may be determined according to Equation 1 below:

[Equation 1]

$$m = \frac{\ln\frac{CV_f}{CV_i} + P^{B_3}}{B_1 * CV_i^{B_2}}$$

(in Equation 1 above, $CV_i$ indicates the color value of the process liquid, $CV_f$ indicates the color value of the decolorizing process liquid, P indicates the purity of the process liquid, m indicates the weight of the adsorbent, and B1, B2, and B3 indicate parameters).

In Equation 1 above, $CV_i$, which indicates the color value of the process liquid, and $CV_f$, which indicates the color value of the decolorizing process liquid, are values obtained by dividing the absorbance of the process liquid at a specific wavelength band (e.g., 420 nm) by the concentration (g/L) of the fermentation product contained in the process liquid.

Additionally, the purity P of the process liquid is a value obtained by dividing the weight (g) of the fermentation product included in the process liquid by the amount (g) of solids in the process liquid (wt.%).

The parameters B1, B2, and B3 in Equation 1 above may be values determined through experiments depending on the type of fermentation products.

Lastly, m is the amount of adsorbent used in the decolorization process, which may mean the weight ratio (% by weight) of the adsorbent needed relative to the weight of the fermentation product in the process liquid before decolorization. For example, when the weight of amino acid, which is a fermentation product in the process liquid, is 5 g and the m value is 5, the weight of the adsorbent needed for the decolorization process may be 0.25 g.

Based on the above-described method, the amount of adsorbent needed to decolorize the process liquid may be determined so that the decolorizing process liquid may have a specific color value. Accordingly, while it is possible to prevent the addition of an unnecessarily large amount of adsorbent, there is also no risk that the desired color value of the decolorizing process liquid may not be achieved due to excessive or under-addition of the adsorbent. As can be seen in Table 1, when the color value of the decolorizing process liquid exceeds or falls below a certain range, the lightness/color value of the final product may vary. Additionally, the difference in lightness/color value in the prepared products may increase, thus increasing the defect rate. However, the above-described problems can be avoided if the decolorization process is carried out after calculating the weight of the adsorbent.

With more detailed description of the process liquid introduced in the decolorization process, a single-type or a mixture of multiple types of fermentation products may be provided in the process liquid. If the color value and purity of each fermentation product provided in the process liquid and the amount of the fermentation product therein can be known, the weight of the adsorbent according to the present disclosure can be calculated, and thus the process according to the present disclosure may be optimized even when multiple types of fermentation products are mixed.

The process liquid may mean a fermentation liquid including the above-mentioned fermentation product. As used herein, the "fermentation liquid" may refer to a product resulting from enzymatic or metabolic decomposition of organic substances using microorganisms. For example, the fermentation liquid may include the culture itself obtained by culturing a microorganism in a culture medium, or a concentrate, dried product, or freeze-dried product of the culture obtained by removing the strain therefrom. In addition, in this case, the fermentation liquid may include the entire fermentation liquid including the fermentation product, or may be one in which impurities have been removed from the fermentation liquid including the fermentation product.

The "microorganism for producing the fermentation product" or "microorganism for producing the fermentation product or desired product" used for preparing the process liquid may include all wild-type microorganisms, or naturally or artificially genetically modified microorganisms, and it may be a microorganism in which a particular mechanism is weakened or enhanced due to insertion of a foreign gene, or enhancement or inactivation of the activity of an endogenous gene, *etc.,* and may be a microorganism including genetic modification to produce a desired protein or fermentation product.

The microorganism for producing the fermentation product of the present disclosure may be a microorganism naturally having a particular fermentation product-producing ability, or a microorganism, in which the fermentation product-producing ability has been imparted to a parent strain having no fermentation product-producing ability, but is not limited thereto. Specifically, as used herein, the microorganism for producing the fermentation product or desired product, or the microorganism having the fermentation product or desired product-producing ability may be a microorganism in which some genes in the biosynthesis pathway of the desired protein or desired product are enhanced or weakened, or some genes in the degradation pathway of the desired protein or desired product are enhanced or weakened. The "enhancement" or "increase" in the fermentation product-producing ability of the microorganism of the present disclosure may mean that the particular fermentation product-producing ability of the microorganism of the present disclosure is enhanced compared to that of a microorganism other than the microorganism of the present disclosure, a parent strain, or a non-modified microorganism. In one example, the microorganism of the present disclosure may have an enhanced producing ability by about 1% or more, 10% or more, 100% or more 200% or more 500% or more 1000% or more, 1100% or more, 1200% or more, 1300% or more, or about 1.01 times or more, 2 times or more, 5 times or more, 10 times or more, 11 times or more, 12 times or more, or 13 times or more compared to the particular fermentation product-producing ability of other microorganisms, but is not limited thereto. As used herein, the term "about" refers to a range including all of $\pm 0.5, \pm 0.4, \pm 0.3, \pm 0.2, \pm 0.1,$ *etc.,* and it includes all of the values equivalent to those which come immediately after the term "about" or those in a similar range, but is not limited thereto.

The above-mentioned microorganism used for preparing the process liquid may be at least one selected from the group consisting of *Candida famata,* which is a yeast, *Eremothecium ashbyii* and *Ashbya gossypii,* which are ascomycetes, *Bacillus subtilis* and microorganisms belonging to the genus *Corynebacterium,* which are bacteria.

When the microorganism used for preparing the process liquid is a microorganism belonging to the genus *Corynebacterium,* the microorganism may specifically be *Corynebacterium glutamicum, Corynebacterium crudilactis, Corynebacterium deserti, Corynebacterium efficiens, Corynebacterium callunae, Corynebacterium stationis, Corynebacterium singulare, Corynebacterium halotolerans, Corynebacterium striatum, Corynebacterium ammoniagenes, Corynebacterium pollutisoli, Corynebacterium imitans, Corynebacterium testudinoris, Corynebacterium crenatum,* or *Corynebacterium flavescens,* more specifically, *Corynebacterium glutamicum,* but is not limited thereto.

The step of preparing the process liquid may further include culturing "the microorganism for producing the fermentation product". The culturing of the microorganism may be performed in a suitable culture medium and culture conditions known in the art. Such a culturing process may be easily adjusted for use by those skilled in the art according to the strain to be selected. Specifically, the culturing may be a batch culture, a continuous culture, and/or a fed-batch culture, but is not limited thereto. As used herein, the term "medium" refers to a mixture of materials which contains nutrient materials required for culturing of the microorganism as a main ingredient, and it supplies nutrient materials and growth factors, along with water that is essential for survival and growth. Specifically, the medium and other culture conditions used for culturing the microorganism of the present disclosure may be any medium used for conventional cultivation of microorganisms without any particular limitation. However, the microorganism of the present disclosure may be cultured under aerobic conditions in a conventional medium containing an appropriate carbon source, nitrogen source, phosphorus source, inorganic compound, amino acid, and/or vitamin, while adjusting temperature, pH, *etc.*

In the step of preparing the process liquid, an excipient may be further provided in addition to the above-described fermentation product in the fermentation liquid. The excipient may include, for example, preservatives, wetting agents, dispersing agents, suspending agents, buffers, stabilizers, or isotonic agents, *etc.,* but is not limited thereto. Additionally, the excipient may be a non-naturally occurring substance or naturally occurring substance, but is not limited thereto.

The excipient mixed in the step of preparing the process liquid may be an excipient that is permitted to be added to food. For example, the excipient may be at least one selected from the group consisting of cross-linked sodium carboxymethyl cellulose, gum ghatti, persimmon color, licorice extract, formic acid, geranyl formate, citronellyl formate, isoamyl formate, gum resin, geraniol, microcrystalline cellulose, cinnamic acid, methyl cinnamate, ethyl cinnamate, cinnamaldehyde, cinnamyl alcohol, kaoliang color, benzoyl peroxide, hydrogen peroxide, peroxyacetic acid, ammonium persulfate, guar gum, disodium 5'-guanylate, citric acid, manganese citrate, trisodium citrate, sodium ferrous citrate, ferric citrate, ferric ammonium citrate, potassium citrate, calcium citrate, magnesium silicate, calcium silicate, silicone resin, diatomaceous earth, gluconic acid, sodium gluconate, copper gluconate, magnesium gluconate, manganese gluconate, zinc gluconate, ferrous gluconate, potassium gluconate, calcium gluconate, glutaminase, butyric acid, butyl butyrate, ethyl butyrate, isoamyl butyrate, neotame, nisin, nicotinic acid, nickel, nicotinamide, dextranase, dextran, sodium lauryl sulfate, lactase, lactoferrin concentrates, lactitol, lecithin, rosin, locust bean gum, rutin, linalool, mannitol, maltol, D-maltitol, sodium metasilicate, sodium metaphosphate, potassium metaphosphate, sodium metabisulfite, potassium metabisulfite, sodium methoxide, sulfur dioxide, myristic acid, microfibrillated cellulose, vanillin, kaolin, betaine, bentonite, powdered cellulose, sodium fluoride, biotin, vitamins, glacial acetic acid, DL-malic acid, sodium saccharin, saffron color, acid clay, sodium bisulfite, acidic sodium aluminum phosphate, disodium dihydrogen pyrophosphate, calcium dihydrogen pyrophosphate, magnesium oxide, zinc oxide, calcium oxide, methyl salicylate, iron sesquioxide, petroleum wax, sodium hydroxide, potassium hydroxide, calcium hydroxide, magnesium hydroxide, sucralose, shellac, steviol glycoside, stearic acid, sodium stearate, food colorings, benzoic acid, sodium benzoate, alginic acid and sodium alginate, inositol, silicon dioxide, chlorine dioxide, carbon dioxide, titanium dioxide, xanthan gum, lactic acid and sodium lactate, gelatin, gellan gum, aspergillus, carnauba wax, carrageenan, karaya gum, carotene, sodium carboxymethyl cellulose, calcium carboxymethyl cellulose, sodium carboxymethyl starch, casein and sodium caseinate, chitosan, chitin, tara gum, tamarind gum, taurine, tannic acid, palmitic acid, ethyl phenylacetate, isobutyl phenylacetate, pectin, pepsin, hydroxypropylmethyl cellulose, hydroxypropyl cellulose, hyaluronic acid, and enzyme extracts.

Prior to performing the decolorization process, removal of strains, desalting, and concentration of the fermentation liquid may be performed. The removal of strains may be performed by various methods such as filtration, centrifugation, *etc.* Additionally, in the step of preparing the process liquid (**S100**), a desalting process may be performed. The desalting process may be performed to remove ionic impurities other than the fermentation product to be prepared. The desalting process may be performed by various methods, such as ion exchange resins, continuous chromatography, *etc.* Additionally, the concentration process may increase the concentration of the fermentation product in the process liquid and enables the easier obtaining of the fermentation product in the subsequent drying process. There are no limitations in performing the concentration process, and various methods such as rotary concentrator, *etc.*, may be used.

The order of filtration, decolorization, removal of strains, and desalting described above may be varied as needed. The filtration, decolorization, and desalting may be performed after removal of strains, or the strains may be removed after filtration, decolorization, and desalting. Through the above-described filtration, decolorization, removal of strains, and desalting processes, impurities other than the fermentation product in the process liquid may be removed.

Subsequently, a drying step of drying the prepared decolorizing process liquid to obtain a fermentation product (**S200**) is performed.

Drying of the process liquid may be performed by various methods, but a spray drying method may be used to obtain the fermentation product in powder form. Spray drying is also known as spray dry, and is a method that can complete drying and granulation simultaneously, which directly dries solutions, emulsions and suspensions into powder or granular products, thereby eliminating evaporation, grinding and other processes. The fermentation products after spray drying may be dispersed into particles, or the fermentation products in the process liquid may be dried into powder by removing most of the moisture. Spray drying is a method of instantly obtaining a dried product of liquid by spraying liquid in a heat stream at once, and may include centrifugal spraying using a rotating disk and pressurized spraying using a pressure nozzle, *etc.,* but is not limited thereto.

The fermentation product obtained after the drying step (**S200**) may be in the form of powder or granules.

With more detailed description of the fermentation product, the fermentation product according to one aspect of the present disclosure includes an amino acid, the L* value of the fermentation product on the CIE color system is 82 to 87, and the color value of the decolorizing process liquid prepared to obtain the fermentation product is 0.003 to 0.006. In particular, the color value of the decolorizing process liquid is a value obtained by dividing the absorbance of visible light/ultraviolet light by the concentration of the fermentation product in the decolorizing process liquid (g/L).

The fermentation product has an L* value of 82 to 87 on the CIE color system. The fermentation product may have a relatively uniform lightness value within the above range. Accordingly, the aesthetics of fermentation product may be improved.

Additionally, the fermentation product having the above-mentioned lightness value may be prepared from the decolorizing process liquid with a color value of 0.003 to 0.006. The method for calculating the color value of the decolorizing process liquid is the same as described above. When preparing the fermentation product from the decolorizing process liquid having the above-described color value, a fermentation product having a uniform lightness value between L* values of 82 and 87 may be prepared. Accordingly, the defect rate caused by differences in lightness values of fermentation products may be significantly reduced.

In the above, the process for obtaining the fermentation product from the process liquid including the fermentation product according to one aspect of the present disclosure, and the fermentation product according to one aspect of the present disclosure were examined. Hereinafter, the production apparatus for preparing the fermentation product and the system that can be used for the production of the fermentation product will be examined.

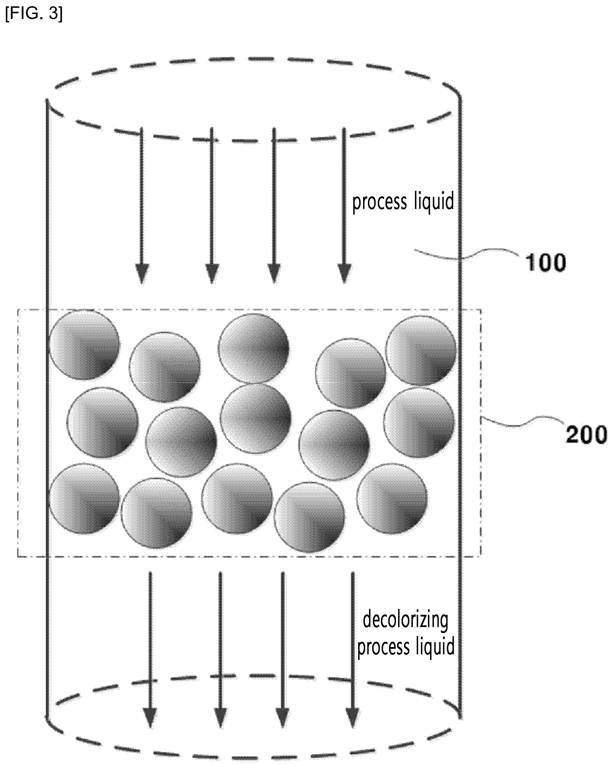

FIG. 3 is a perspective view showing part of the production apparatus for the fermentation product according to the present disclosure.

With reference to FIG. 3, the production apparatus for the fermentation product includes a decolorization device **(100)** provided such that the process liquid including the fermentation product can flow through an adsorbent **(200),** which is provided with the adsorbent **(200)** therein, and the weight of the adsorbent **(200)** is determined based on the color value and purity of the process liquid and the color value of the decolorizing process liquid to be obtained after decolorization.

The decolorization device **(100)** is in a form which provides an adsorbent **(200)** on the inside, and at the same time includes a flow path through which the process liquid and the decolorizing process liquid can flow. As described above, the adsorbent **(200)** may be at least one selected from the group consisting of activated carbon, clay mineral, silica gel, polymer resin, and Celite. The adsorbent **(200)** may be provided in the form of a packed bed within the flow path included in the decolorization device **(100)** as shown in the drawing. However, in some cases, the adsorbent **(200)** may be provided in the form of a membrane within the flow path or may be provided on the wall, but there is no limitation to the method of providing the adsorbent **(200).**

The decolorization device **(100)** may have a cylindrical flow path as shown in the drawing. However, in addition to the form shown in the drawing, the decolorization device **(100)** may be implemented in various forms which provides the adsorbent **(200)** and enables the process liquid to flow through the adsorbent **(200).**

The weight of the adsorbent **(200)** provided in the decolorization device **(100)** may be determined according to the following Equation 1. Accordingly, an appropriate amount of adsorbent **(200)** may be provided depending on the color value and purity of the process liquid used in the decolorization process and the color value of the decolorizing process liquid to be obtained after decolorization, and the under/excessive addition of the adsorbent **(200)** may be prevented.

[Equation 1]

$$m = \frac{\ln\frac{CV_f}{CV_i} + P^{B_3}}{B_1 * CV_i^{B_2}}$$

(in Equation 1 above, $CV_i$ indicates the color value of the process liquid, $CV_f$ indicates the color value of the decolorizing process liquid, P indicates the purity of the process liquid, m indicates the weight of the adsorbent, and B1, B2, and B3 indicate parameters).

The production apparatus for the fermentation product may further include elements other than the decolorization device described above. For example, the production apparatus for the fermentation product may further include a fermenter for preparing a fermentation liquid, a concentration device for concentrating the fermentation liquid prepared from the fermenter, a drying device for drying the decolorizing process liquid after decolorization, *etc.*

The production apparatus for the fermentation product described above may be operated with system software.

Specifically, according to one aspect of the present disclosure, there is provided a software which includes the steps of:

inputting the color value and purity of the process liquid and the weight of an adsorbent used for decolorization of the process liquid; and calculating the color value of the decolorizing process liquid to be obtained after decolorization, and determining the color value of the decolorizing process liquid according to Equation 2 below. The above-described software may be provided in a form stored on a recording medium.

[Equation 2]

$$CV_f = CV_i \, exp((B_1 CV_i{}^{B_2}) \, m - P^{B_3})$$

(in Equation 2 above, $CV_i$ indicates the color value of the process liquid, $CV_f$ indicates the color value of the decolorizing process liquid, P indicates the purity of the process liquid, m indicates the weight of the adsorbent, and B1, B2, and B3 indicate parameters)

In this regard, the system software for preparing the fermentation product may be used to calculate the weight of the adsorbent (200) as previously examined, but on the contrary, it may also be used to calculate the color value of the decolorizing process liquid based on the weight of the adsorbent (200) provided in the decolorization process, and the color value and purity of the process liquid.

In particular, the parameters B1, B2, and B3 in Equation 2 above or in the previously described Equation 1 may be values derived from previously performed process conditions. For example, while repeating the decolorization process, the color value and purity of the process liquid, the weight of the adsorbent (200), and the color value of the decolorizing process liquid after decolorization obtained therefrom are recorded, and the parameters B1, B2, and B3 are determined based on the recorded data. Specifically, the B1, B2, and B3 parameter values required for Equation 2 may be derived by regression using the data obtained from the color values of the process liquid before and after decolorization by the utilization of the adsorbent according to any weight. In this way, the parameter values of B1, B2, and B3 needed for Equation 2 may be obtained for each fermentation product.

In particular, since the absorption patterns that affect the color value vary depending on the type of the fermentation products, parameters B1, B2, and B3 may vary depending on the type of the fermentation products. For example, amino acids, nucleic acids, etc. may each have their own unique B1, B2, and B3 parameter values. Therefore, the system software stores the values of parameters B1, B2, and B3 according to the type of the fermentation product, and may retrieve and use the parameters to calculate the color value of the decolorizing process liquid or to calculate the weight of the adsorbent (200) during the production process of particular fermentation products.

The above-described system software may be implemented using hardware components, software components, and/or a combination of the hardware components and software components. For example, the apparatus, methods, and components described in Examples may be implemented using general-purpose or special purpose computers, such as, for example, a processor, a controller and an arithmetic logic unit (ALU), a digital signal processor, a microcomputer, a field programmable gate array (FPGA), a programmable logic unit (PLU), a microprocessor or any other device capable of executing instructions and responding thereto. The processing device may run an operating system (OS) and software applications that run on the OS. Additionally, the processing device also may access, store, manipulate, process, and create data in response to execution of the software. For the purpose of convenience in understanding, the description of the processing device is used as singular; however, those skilled in the art will appreciate that the processing device may include multiple processing elements and/or multiple types of processing elements. For example, the processing device may include multiple processors or a single processor, and a single controller. In addition, other processing configurations, such as parallel process, are possible.

Additionally, the method for determining the weight of the adsorbent of the process liquid described above may be implemented in a software form. The software may include a computer program, a code, an instruction, or one or more combinations thereof, to configure the processing device to operate as desired or to independently or collectively instruct the processing device. Software and/or data may be embodied permanently or temporarily in any type of machine, component, physical or virtual equipment, computer storage medium or device, or in a propagated signal wave so as to be interpreted by the processing device or to provide instructions or data to the processing device. The software also may be distributed over network coupled computer systems so that the software is stored and executed in a distributed manner. The software and data may be stored in a computer-readable recording medium. The methods according to the embodiments may be implemented in the form of a program instruction executed by a variety of computer means to be stored in computer-readable media. The computer-readable medium may include program instructions, data files, data structures, *etc.,* alone or a combination thereof, and the program instructions recorded on the media may be those specially designed and configured for the purposes of the embodiments, or they may be of the kind well-known and available to those skilled in the computer software field. Examples of the computer-readable media include magnetic media such as hard disks, floppy disks, and magnetic tape; optical media such as CD ROM disks and DVDs; magneto-optical media such as floptical discs; and hardware devices that are specially configured to store and perform program instructions, such as read-only memory (ROM), random access memory (RAM), flash memory, *etc.* Examples of program instructions may include not only a mechanical code, such as those produced by a compiler, but also a high-level language code executable on a computer using an interpreter, *etc.*

**[Mode for Carrying Out the Invention]**

Hereinafter, the present disclosure will be described in detail by way of Examples. However, these Examples are merely preferred Examples given for illustrative purposes, and thus, the scope of the present disclosure is not intended to be limited to or by these Examples. Meanwhile, technical features which are not described herein can be sufficiently understood and easily carried out by those skilled in the art in the technical field of the present disclosure or in a similar technical field.

In the above, the preparation process of the fermentation product according to one aspect of the present disclosure, the production apparatus for the fermentation product, and the operation system thereof have been examined. Hereinafter, the beneficial effects mentioned in the present disclosure will be described through the glutamic acid experimental results.

**Preparation Example 1. Preparation of L-Glutamic Acid via Fermentation Process**

In order to confirm the validity of Equations 1 and 2, which are the relationship equations between the process liquid, amount of adsorbent, and color values during the decolorization process of the fermentation product according to the present disclosure, L-glutamic acid was used as the fermentation product. L-glutamic acid used for validating the effectiveness was prepared as follows:

(1) Cultivation of L-Glutamic Acid-Producing Strain

1) Preparation of Culture Medium

*Corynebacterium glutamicum* KFCC-11113 (mutant strain obtained by treatment with *N*-methyl-*N'*-nitro-N-nitrosoguanidine (NTG) derived from *Corynebacterium glutamicum* KFCC-10656), which can produce L-glutamic acid at high concentration, was cultured in a medium prepared as follows. All ingredients used for the preparation of the culture medium were food grade materials.

First Seed Medium: containing glucose 1%, yeast extract 1%, sodium chloride 0.25%, urea 0.1% and ammonium chloride 0.1% at pH 7.0 was prepared.

Second Seed Medium: containing raw sugar 5%, yeast extract 1%, monopotassium phosphate 0.2%, magnesium sulfate 0.05%, iron sulfate 0.002%, biotin 1 mg/l, thiamine hydrochloride 2 mg/l, and some antifoaming agent at pH 7.0 was prepared.

Fermentation Medium: containing raw sugar 8%, yeast extract 0.5%, monopotassium phosphate 0.2%, magnesium sulfate 0.05%, iron sulfate 0.002%, biotin 1 mg/l, thiamine hydrochloride 2 mg/l, manganese sulfate, 0.001%, zinc sulfate 0.001%, and some antifoaming agent at pH 7.2 was prepared

2) Cultivation of Microorganisms using Ammonia as a pH Regulator

50 ml of the first seed medium was dispensed into a 500 ml-Erlenmeyer flask, sterilized under pressure for 20 minutes at 121°C and cooled, then inoculated with *Corynebacterium glutamicum* KFCC-11113 and cultured with shaking at a rotation speed of 200 times/min at a temperature of 30°C for 20 hours.

2 L of the second seed medium was dispensed into a 5 L-test fermenter, sterilized under pressure for 20 minutes at 121°C and cooled, then inoculated with 150 ml of the first seed culture and cultured at 900 rpm and 30°C for 18 hours, while supplying air at a rate of 2 L per minute.

2 L of the fermentation medium was dispensed into a 5 L-test fermenter, sterilized under pressure for 20 minutes at 121°C and cooled, then inoculated with 30 ml of the second seed culture and cultured at 900 rpm and a temperature range of 30 to 39°C, while supplying air at a rate of 2 L per minute.

While culturing under the above conditions, a nonionic surfactant was added at a concentration of 0.01% to 0.5% between the beginning and the end of the logarithmic phase of the growth curve of *Corynebacterium glutamicum* KFCC-11113, and the pH of the fermentation liquid during cultivation was continuously adjusted using 33% ammonia water to a range of 7.0 to 7.8. During cultivation, when the concentration of residual sugar reached 0.5 to 1.5%, sterilized raw sugar was added regularly, and the culture continued until the total amount of added sugar reached 18% of the amount of the fermentation liquid. After completion of cultivation, the residual amount of ammonia was 15.2 g/L, and the concentration of L-glutamic acid was 102 g/L.

**Example 1. Derivation of Model Parameters via Fermentation Glutamic Acid Process Data**

In order to derive the parameters B1 to B3 used in Equations 1 and 2 described above, a decolorization process was performed using the fermented glutamic acid prepared according to Preparation Example 1. The parameter values of B1, B2, and B3 needed for Equation 2 were derived by regression using the data obtained by the color value of the process liquid before and after decolorization by the utilization of the adsorbent according to any weight, and the results are as follows. The parameter values of B1, B2, and B3 needed for Equation 2 for each fermentation product may be obtained in the same manner as disclosed herein (e.g., amino acids, nucleic acids, *etc.* each have their own unique parameter values of B1, B2, and B3).

[Table 2]

| Model Equation | Parameters | | |
|---|---|---|---|
| $CV_f = CV_i \, exp((B_1 CV_i^{B2})m - P^{B3})$ | B1 | B2 | B3 |
| | -0.01015 | -0.9 | 0.9 |

**Example 2. Examination of Validity of Model Equation via Comparison between Experimental Value of Color of Decolorizing Process liquid ($CV_f$) and Derived Value Through Model Equation**

In order to confirm how similarly the model applying the parameters derived in Example 1 predicts decolorization, the relationship between the color value of the decolorizing process liquid ($CV_f$) predicted through the model according to Table 2 and the measured color value of the decolorizing process liquid ($CV_f$) was shown with a graph.

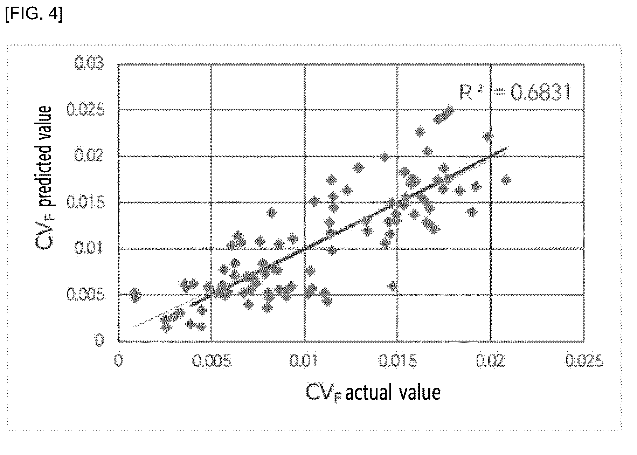

FIG. 4 and Table 3 show the correlation graph between the color value of the decolorizing process liquid ($CV_f$) predicted through the model equation and the measured color value of the decolorizing process liquid ($CV_f$). In order to verify the reliability of the model equation, the measured color value ($CV_f$ (measured)) and the predicted color value ($CV_f$ (predicted)) after repeated decolorization were compared while varying the concentration of L-glutamic acid in the process liquid and the volume of the process liquid. Specifically, as shown in Table 3, the measured color value ($CV_f$ (measured)) and the predicted color value ($CV_f$ (predicted)) after repeated decolorization were compared using the process liquids with a volume of about 4 kL to about 8 kL having different L-glutamic acid concentrations. The measured color value was calculated by dividing the degree (absorbance) to which the process liquid absorbed light at a wavelength band of 420 nm after decolorization by the concentration of L-glutamic acid concentration in the decolorizing process liquid. The predicted color value was calculated using the model equation in Table 2.

[Table 3]

| No. | Glutamic Acid Concentration in Process liquid [g/L] | Purity (P) [wt.%] | $CV_i$ | Amount of Activated Carbon (m) [wt.%] | $CV_f$ (Measured) | $CV_f$ (Predicted) |
|---|---|---|---|---|---|---|
| 1 | 135.7 | 0.446 | 0.054 | 5.583 | 0.011 | 0.015 |
| 2 | 148.6 | 0.438 | 0.061 | 3.365 | 0.018 | 0.025 |
| 3 | 158.4 | 0.429 | 0.056 | 4.509 | 0.013 | 0.019 |
| 4 | 151.7 | 0.413 | 0.069 | 5.274 | 0.017 | 0.024 |
| 5 | 146 | 0.412 | 0.084 | 12.016 | 0.016 | 0.017 |
| 6 | 147.8 | 0.418 | 0.095 | 14.885 | 0.016 | 0.017 |
| 7 | 140 | 0.410 | 0.091 | 13.784 | 0.018 | 0.018 |
| 8 | 146.8 | 0.411 | 0.098 | 12.385 | 0.016 | 0.023 |
| 9 | 140 | 0.407 | 0.072 | 8.475 | 0.015 | 0.018 |
| 10 | 145.1 | 0.405 | 0.074 | 9.345 | 0.016 | 0.017 |
| 11 | 152.2 | 0.383 | 0.073 | 9.386 | 0.021 | 0.017 |
| 12 | 124.1 | 0.377 | 0.085 | 10.073 | 0.020 | 0.022 |
| 13 | 138 | 0.430 | 0.070 | 10.519 | 0.016 | 0.014 |
| 14 | 149.4 | 0.384 | 0.076 | 9.413 | 0.017 | 0.019 |
| 15 | 156.65 | 0.429 | 0.075 | 9.575 | 0.017 | 0.017 |
| 16 | 128.3 | 0.406 | 0.076 | 13.755 | 0.013 | 0.012 |

(continued)

| No. | Glutamic Acid Concentration in Process liquid [g/L] | Purity (P) [wt.%] | $CV_i$ | Amount of Activated Carbon (m) [wt.%] | $CV_f$ (Measured) | $CV_f$ (Predicted) |
|---|---|---|---|---|---|---|
| 17 | 144.9 | 0.409 | 0.129 | 28.755 | 0.015 | 0.013 |
| 18 | 148.3 | 0.417 | 0.127 | 27.394 | 0.015 | 0.014 |
| 19 | 150 | 0.398 | 0.138 | 32.000 | 0.015 | 0.013 |
| 20 | 150.1 | 0.393 | 0.143 | 29.610 | 0.018 | 0.016 |
| 21 | 144.3 | 0.420 | 0.050 | 6.188 | 0.017 | 0.012 |
| 22 | 145.5 | 0.411 | 0.056 | 6.443 | 0.015 | 0.015 |
| 23 | 146.5 | 0.395 | 0.056 | 6.205 | 0.015 | 0.016 |
| 24 | 149.6 | 0.436 | 0.066 | 6.077 | 0.014 | 0.020 |
| 25 | 153.1 | 0.447 | 0.034 | 5.938 | 0.015 | 0.006 |
| 26 | 141.7 | 0.401 | 0.085 | 13.722 | 0.017 | 0.015 |
| 27 | 150.8 | 0.394 | 0.083 | 13.856 | 0.017 | 0.014 |
| 28 | 144.2 | 0.392 | 0.087 | 12.879 | 0.016 | 0.018 |
| 29 | 157.9 | 0.401 | 0.098 | 13.722 | 0.017 | 0.021 |
| 30 | 146.6 | 0.405 | 0.065 | 10.335 | 0.017 | 0.012 |
| 31 | 149 | 0.379 | 0.073 | 12.390 | 0.017 | 0.013 |
| 32 | 148.4 | 0.401 | 0.074 | 10.589 | 0.016 | 0.016 |
| 33 | 164.9 | 0.403 | 0.083 | 14.078 | 0.019 | 0.014 |
| 34 | 165.7 | 0.400 | 0.089 | 14.010 | 0.017 | 0.017 |
| 35 | 166 | 0.431 | 0.086 | 12.682 | 0.019 | 0.017 |
| 36 | 162 | 0.410 | 0.101 | 23.414 | 0.012 | 0.010 |
| 37 | 165.7 | 0.403 | 0.104 | 23.709 | 0.014 | 0.011 |
| 38 | 176.5 | 0.400 | 0.108 | 23.856 | 0.015 | 0.012 |
| 39 | 178.4 | 0.418 | 0.154 | 34.202 | 0.015 | 0.015 |
| 40 | 158.8 | 0.415 | 0.158 | 38.233 | 0.013 | 0.013 |
| 41 | 142.5 | 0.444 | 0.169 | 39.367 | 0.012 | 0.014 |
| 42 | 148.4 | 0.412 | 0.065 | 7.351 | 0.011 | 0.017 |
| 43 | 148.9 | 0.399 | 0.072 | 5.891 | 0.018 | 0.024 |
| 44 | 140.8 | 0.453 | 0.065 | 7.748 | 0.012 | 0.016 |
| 45 | 143.7 | 0.436 | 0.074 | 9.941 | 0.012 | 0.016 |
| 46 | 142.9 | 0.504 | 0.076 | 20.650 | 0.010 | 0.005 |
| 47 | 144.4 | 0.481 | 0.116 | 29.778 | 0.006 | 0.008 |
| 48 | 144.4 | 0.481 | 0.116 | 32.029 | 0.006 | 0.007 |
| 49 | 148.4 | 0.445 | 0.103 | 31.855 | 0.011 | 0.005 |
| 50 | 154.8 | 0.424 | 0.116 | 26.997 | 0.008 | 0.011 |
| 51 | 150.4 | 0.411 | 0.111 | 34.540 | 0.007 | 0.006 |
| 52 | 143.6 | 0.422 | 0.078 | 24.013 | 0.011 | 0.004 |
| 53 | 144.7 | 0.444 | 0.085 | 25.769 | 0.008 | 0.005 |
| 54 | 140.8 | 0.452 | 0.087 | 29.481 | 0.008 | 0.004 |

(continued)

| No. | Glutamic Acid Concentration in Process liquid [g/L] | Purity (P) [wt.%] | $CV_i$ | Amount of Activated Carbon (m) [wt.%] | $CV_f$ (Measured) | $CV_f$ (Predicted) |
|---|---|---|---|---|---|---|
| 55 | 141.9 | 0.460 | 0.092 | 30.400 | 0.007 | 0.004 |
| 56 | 144.8 | 0.418 | 0.084 | 25.113 | 0.009 | 0.005 |
| 57 | 144.9 | 0.409 | 0.086 | 25.633 | 0.008 | 0.005 |
| 58 | 146.9 | 0.427 | 0.101 | 25.212 | 0.008 | 0.008 |
| 59 | 147.5 | 0.389 | 0.231 | 65.010 | 0.011 | 0.013 |
| 60 | 168.9 | 0.408 | 0.226 | 65.011 | 0.011 | 0.012 |
| 61 | 144.8 | 0.425 | 0.173 | 47.252 | 0.009 | 0.011 |
| 62 | 139.7 | 0.408 | 0.162 | 49.852 | 0.010 | 0.008 |
| 63 | 140.7 | 0.404 | 0.179 | 64.612 | 0.005 | 0.005 |
| 64 | 141.8 | 0.418 | 0.188 | 65.298 | 0.006 | 0.006 |
| 65 | 145.1 | 0.387 | 0.065 | 17.543 | 0.007 | 0.005 |
| 66 | 138.8 | 0.399 | 0.063 | 26.417 | 0.004 | 0.002 |
| 67 | 142.7 | 0.421 | 0.063 | 25.028 | 0.004 | 0.002 |
| 68 | 149.2 | 0.420 | 0.072 | 18.767 | 0.005 | 0.006 |
| 69 | 161.7 | 0.447 | 0.129 | 40.479 | 0.009 | 0.006 |
| 70 | 150.2 | 0.412 | 0.130 | 42.049 | 0.010 | 0.006 |
| 71 | 148.3 | 0.435 | 0.144 | 48.165 | 0.009 | 0.005 |
| 72 | 150 | 0.456 | 0.153 | 48.889 | 0.007 | 0.006 |
| 73 | 152.2 | 0.450 | 0.066 | 10.771 | 0.006 | 0.011 |
| 74 | 144.3 | 0.484 | 0.058 | 11.361 | 0.006 | 0.008 |
| 75 | 146.9 | 0.537 | 0.058 | 13.615 | 0.006 | 0.005 |
| 76 | 152.5 | 0.478 | 0.061 | 15.828 | 0.006 | 0.005 |
| 77 | 145.7 | 0.422 | 0.073 | 19.966 | 0.005 | 0.005 |
| 78 | 153.2 | 0.452 | 0.080 | 27.198 | 0.004 | 0.003 |
| 79 | 157.8 | 0.457 | 0.096 | 27.038 | 0.004 | 0.006 |
| 80 | 142.1 | 0.432 | 0.122 | 35.783 | 0.007 | 0.007 |
| 81 | 145.6 | 0.422 | 0.133 | 38.156 | 0.009 | 0.008 |
| 82 | 146.5 | 0.409 | 0.134 | 38.765 | 0.008 | 0.008 |
| 83 | 153.3 | 0.415 | 0.103 | 27.804 | 0.008 | 0.007 |
| 84 | 144.4 | 0.405 | 0.108 | 30.518 | 0.007 | 0.007 |
| 85 | 143.2 | 0.408 | 0.100 | 30.124 | 0.009 | 0.006 |
| 86 | 142.5 | 0.405 | 0.104 | 31.189 | 0.004 | 0.006 |
| 87 | 163 | 0.457 | 0.069 | 16.989 | 0.004 | 0.006 |
| 88 | 153 | 0.435 | 0.069 | 24.401 | 0.003 | 0.003 |
| 89 | 153.8 | 0.427 | 0.073 | 27.742 | 0.003 | 0.002 |
| 90 | 166.9 | 0.469 | 0.095 | 27.961 | 0.001 | 0.005 |
| 91 | 167.7 | 0.463 | 0.091 | 28.299 | 0.001 | 0.005 |
| 92 | 166.2 | 0.484 | 0.121 | 38.599 | 0.001 | 0.005 |

(continued)

| No. | Glutamic Acid Concentration in Process liquid [g/L] | Purity (P) [wt.%] | $CV_i$ | Amount of Activated Carbon (m) [wt.%] | $CV_f$ (Measured) | $CV_f$ (Predicted) |
|---|---|---|---|---|---|---|
| 93 | 157.4 | 0.425 | 0.131 | 32.305 | 0.007 | 0.011 |
| 94 | 158.8 | 0.413 | 0.130 | 31.486 | 0.009 | 0.011 |

For the data in Table 3, the correlation coefficient $R^2$ between the measured color value ($CV_f$ (measured)) and the predicted color value ($CV_f$ (predicted)) after decolorization was calculated using the Pearson correlation function. The thus-calculated correlation coefficient ($R^2$) was 0.6836. In general, if the $R^2$ value calculated using the Pearson correlation function is 0.5 or higher, it is determined that there is a correlation. Thus, the correlation coefficient calculated for the experimental results of the present disclosure implies that there is a very high correlation between the measured color value ($CV_f$ (measured)) and the predicted color value ($CV_f$ (predicted)) after decolorization. As a result, it was confirmed that the model equation of the present disclosure properly simulated the decolorization process.

**Example 3. Examination of Validity of Model Equation using Amount of Activated Carbon as Parameter**

Next, the process liquid before decolorization (purity of fermented L-glutamic acid: 50%, concentration of L-glutamic acid: 158.7 g/L, UV absorbance at 420 nm: 14.88 (CV value 0.09376)) was substituted into the model equation to calculate the amount of activated carbon, which meets the color value of the decolorizing process liquid ($CV_f$) of 0.004. As a result of the calculation, it was confirmed that 30.5% (w/w) of activated carbon was needed relative to the concentration of L-glutamic acid.

The above-mentioned calculated amount of activated carbon was added to the process liquid, and the resultant was stirred by an overhead stirrer (Daehan Scientific Group, stirrer, DH.WOS01051) using a Teflon stirring rod (Korea Ace Science Co., Ltd., Teflon stirring rod, KA22-06) in a 500 ml jacketed reactor (Hwankyung Tech Co., Ltd., double-jacketed reactor, RF-1070-4NS) for 1 hour at 60°C, and then filtered through a 0.45 um filter or less to proceed with the decolorization process. It was confirmed that the color value of the decolorizing process liquid after decolorization was 0.00385.

Thereafter, an excipient (Dextrin, DE20) was mixed with the process liquid with a ratio of about 45 wt% relative to the process liquid, and a spray-dried feed was prepared so that the L-glutamic acid content was 20% and the solid content was 40%.

When the process liquid was spray-dried in a spray dryer (EINSYSTEM Co., Ltd. SD900) under the conditions (i.e., an inlet air temperature of 190°C, an outlet temperature of 95°C, and a process liquid input rate of 1 kL/hr), the production rate of dry powder was 440 kg/hr, and the color value (L*) of the obtained product was 85.24, thereby confirming that this satisfied the product quality standard (CIE lightness standard: L* 82 to 87).

Therefore, it was confirmed that the relationship between the purity of the process liquid, color value, weight of the adsorbent, and purity of the decolorizing process liquid according to the model equation (Equation 1 and Equation 2) examined above was effectively established, and accordingly, the fermentation products with specific color could be prepared.

From the foregoing, a skilled person in the art to which the present disclosure pertains will be able to understand that the present disclosure may be embodied in other specific forms without modifying the technical concepts or essential characteristics of the present disclosure. In this regard, the exemplary embodiments disclosed herein are only for illustrative purposes and should not be construed as limiting the scope of the present disclosure. On the contrary, the present disclosure is intended to cover not only the exemplary embodiments but also various alternatives, modifications, equivalents, and other embodiments that may be included within the spirit and scope of the present disclosure as defined by the appended claims.

**Claims**

1.  A method for preparing a fermentation product, comprising:

a decolorization step of preparing a decolorizing process liquid by decolorizing the process liquid comprising a fermentation product with an adsorbent; and
a drying step of drying the decolorizing process liquid to obtain a fermentation product,
wherein the decolorization step comprises:

measuring the color value and purity of the process liquid; determining the color value of the decolorizing process liquid to be obtained; and determining the weight of the adsorbent to be used for decolorization based on the color value and purity of the process liquid and the color value of the decolorizing process liquid to be obtained.

2. The method of claim 1, wherein the weight of the adsorbent to be used for decolorization is determined according to Equation 1 below:

[Equation 1]

$$m = \frac{\ln\frac{CV_f}{CV_i} + P^{B_3}}{B_1 * CV_i^{B_2}}$$

(in Equation 1 above, $CV_i$ indicates the color value of the process liquid, $CV_f$ indicates the color value of the decolorizing process liquid, P indicates the purity of the process liquid, m indicates the weight of the adsorbent, and B1, B2, and B3 indicate parameters).

3. The method of claim 1, wherein the fermentation product comprises at least one selected from the group consisting of amino acids and organic acids.

4. The method of claim 1, wherein the color value ($CV_i$ and $CV_f$) of the process liquid and the decolorizing process liquid is a value obtained by dividing the absorbance of visible light/ultraviolet light by the concentration (g/L) of the fermentation product in the process liquid.

5. The method of claim 1, wherein the drying step comprises a spray drying process.

6. The method of claim 1, further comprising, before the decolorization step, removing bacteria from a fermentation liquid containing the fermentation product and concentrating the fermentation liquid to prepare the process liquid.

7. A fermentation product, which comprises amino acids in the fermentation product,

wherein the L* value of the fermentation product on the CIE color system is 82 to 87;
the color value of the decolorizing process liquid prepared to obtain the fermentation product is 0.003 to 0.006; and
the color value of the decolorizing process liquid is a value obtained by dividing the absorbance of visible light/ultraviolet light by the concentration (g/L) of the fermentation product in the decolorizing process liquid.

8. The fermentation product of claim 7, wherein the amino acid comprises glutamic acid.

9. The fermentation product of claim 7, in the form of powder or granules.

10. A production apparatus for fermentation products, which comprises a decolorization device provided such that a process liquid comprising a fermentation product can flow through an adsorbent, which is provided with the absorbent therein,
wherein the weight of the adsorbent is determined based on the color value and purity of the process liquid and the color value of the decolorizing process liquid to be obtained after decolorization.

11. The production apparatus of claim 10, wherein the weight of the adsorbent to be used for decolorization is determined according to Equation 1 below:

[Equation 1]

$$m = \frac{\ln \frac{CV_f}{CV_i} + P^{B_3}}{B_1 * CV_i^{B_2}}$$

(in Equation 1 above, $CV_i$ indicates the color value of the process liquid, $CV_f$ indicates the color value of the decolorizing process liquid, P indicates the purity of the process liquid, m indicates the weight of the adsorbent, and B1, B2, and B3 indicate parameters).

**12.** A recording medium storing software, which comprises the steps of:

inputting the color value and purity of a process liquid and the weight of an adsorbent used for decolorization of the process liquid; and
calculating the color value of a decolorizing process liquid to be obtained after decolorization,
wherein the color value of the decolorizing process liquid is determined according to Equation 2 below:

[Equation 2]

$$CV_f = CV_i \, exp((B_1 CV_i^{B_2}) \, m - P^{B_3})$$

(in Equation 2 above, $CV_i$ indicates the color value of the process liquid, $CV_f$ indicates the color value of the decolorizing process liquid, P indicates the purity of the process liquid, m indicates the weight of the adsorbent, and B1, B2, and B3 indicate parameters).

[FIG. 1]

```
                          ┌──────────┐
                          │  Start   │
                          └──────────┘
                                │
                                ▼
┌──────────────────────────────────────────────────────┐
│ [Decolorizing step] preparing a decolorizing process  │       S100
│ liquid by decolorizing a process liquid with an        │
│ adsorbent                                               │
└──────────────────────────────────────────────────────┘
                                │
                                ▼
┌──────────────────────────────────────────────────────┐
│ [Drying step] obtaining a fermentation product by      │       S200
│ drying the decolorizing process liquid                 │
└──────────────────────────────────────────────────────┘
                                │
                                ▼
                          ┌──────────┐
                          │   End    │
                          └──────────┘
```

[FIG. 2]

[FIG. 3]

process liquid

100

200

decolorizing
process liquid

[FIG. 4]

# INTERNATIONAL SEARCH REPORT

| International application No. |
| --- |
| **PCT/KR2024/006265** |

## A. CLASSIFICATION OF SUBJECT MATTER

**A23L 5/40**(2016.01)i; **A23L 27/20**(2016.01)i; **A23L 3/46**(2006.01)i; **A23L 5/00**(2016.01)i

According to International Patent Classification (IPC) or to both national classification and IPC

## B. FIELDS SEARCHED

Minimum documentation searched (classification system followed by classification symbols)

A23L 5/40(2016.01); A23L 17/00(2016.01); A23L 17/20(2016.01); A23L 27/24(2016.01); C07C 29/80(2006.01); C12P 7/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 발효(fermentation), 흡착재(adsorbent), 탈색(decolorization), 건조(drying), 색도(color), 순도(purity), 흡광도(absorbance)

## C. DOCUMENTS CONSIDERED TO BE RELEVANT

| Category* | Citation of document, with indication, where appropriate, of the relevant passages | Relevant to claim No. |
| --- | --- | --- |
| A | KR 10-1996-0014610 B1 (NONGSHIM CO., LTD.) 19 October 1996 (1996-10-19)<br>See paragraphs [0021]-[0026], [0031]-[0032] and [0041]-[0044]; and table 2. | 1-12 |
| A | CHO, Won-Il et al. Decolorization Processing and Quality Characteristics of Salt-fermented Anchovy Sauce by Active Carbon Powder. Food Eng. Prog. February 2018, vol. 22, no. 1, pp. 35-42.<br>See page 36, left column; page 38, right column; page 39, left column and page 41; and figures 1-3. | 1-12 |
| A | KR 10-2010-0075264 A (CJ CHEILJEDANG CORPORATION) 02 July 2010 (2010-07-02)<br>See entire document. | 1-12 |
| A | KR 10-2001-0046939 A (KOREA FOOD DEVELOPMENT INSTITUTE) 15 June 2001 (2001-06-15)<br>See entire document. | 1-12 |
| A | WO 2023-010982 A1 (SUZHOU SUZHEN BIOENGINEERING CO., LTD.) 09 February 2023 (2023-02-09)<br>See entire document. | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 August 2024** | **16 August 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 696 148 A1**

<table>
<tr><td colspan="2"><b>INTERNATIONAL SEARCH REPORT</b><br><b>Information on patent family members</b></td><td colspan="2">International application No.<br><br><b>PCT/KR2024/006265</b></td></tr>
</table>

| Patent document cited in search report | | | Publication date (day/month/year) | Patent family member(s) | | | Publication date (day/month/year) |
|---|---|---|---|---|---|---|---|
| KR | 10-1996-0014610 | B1 | 19 October 1996 | KR 10-1995-0016571 | | A | 20 July 1995 |
| KR | 10-2010-0075264 | A | 02 July 2010 | CN | 102281774 | A | 14 December 2011 |
| | | | | EP | 2377408 | A2 | 19 October 2011 |
| | | | | EP | 2377408 | A4 | 27 June 2012 |
| | | | | JP | 2012-513211 | A | 14 June 2012 |
| | | | | JP | 5538428 | B2 | 02 July 2014 |
| | | | | KR | 10-1079362 | B1 | 02 November 2011 |
| | | | | US | 2011-0256276 | A1 | 20 October 2011 |
| | | | | WO | 2010-074431 | A2 | 01 July 2010 |
| | | | | WO | 2010-074431 | A3 | 12 August 2010 |
| KR | 10-2001-0046939 | A | 15 June 2001 | KR | 10-0348749 | B1 | 13 August 2002 |
| WO | 2023-010982 | A1 | 09 February 2023 | CN | 113337548 | A | 03 September 2021 |
| | | | | CN | 113337548 | B | 22 March 2022 |

Form PCT/ISA/210 (patent family annex) (July 2022)